# FASCICULE DE BREVET EUROPEEN

(11) **EP 0 860 691 B1**
(45) Date de publication et mention de la délivrance du brevet: **16.06.2004**
(21) Numéro de dépôt: 98870029.0
(22) Date de dépôt: 13.02.1998
(51) Int. Cl.: G01M 3/10

(54) **Procédé et dispositif de contrôle et/ou de mesure d'étanchéité de conduites et de réservoirs**
Verfahren und Vorrichtung zur Überprüfung und/oder Messung der Dichtheit von Leitungen oder Behältern
Method and device for montitoring and/or measuring the tightness of pipes and tanks

(30) Priorité: 18.02.1997 BE 9700150
(43) Date de publication de la demande: 26.08.1998
(73) Titulaire: International Tank Management Technologies S.A, 5032 Gembloux (BE)
(72) Inventeur: Vigneron, Jean-Pierre, 5060 Falisolle (BE)
(74) Mandataire: Van Malderen, Joelle

(56) Documents cités:
- CH-A- 524 818
- DE-A- 2 323 093
- FR-A- 2 248 497
- US-A- 3 177 702
- US-A- 3 224 252
- US-A- 3 581 101
- PATENT ABSTRACTS OF JAPAN vol. 9, no. 199 (P-380), 16 août 1985 & JP 60 063438 A (NICHIEI BOUEKI KK), 11 avril 1985,

## Description

### Objet de l'invention

La présente invention concerne un procédé et un dispositif de contrôle de l'étanchéité d'une enceinte telle qu'une conduite ou un réservoir, pouvant contenir des liquides ou des gaz et susceptible de présenter des fuites, en particulier tout type de conduites et/ou de réservoirs en des matériaux quelconques tels que le métal, les matières plastiques, le caoutchouc renforcé ou non, le verre, etc.

### Arrière-plan technologique et état de la technique à la base de l'invention

La demande de brevet EP-0359570-A décrit un dispositif et un procédé de détection, qui sont destinés à détecter une fuite dans un réservoir au moyen de la mesure directe par des moyens de mesure d'ultrasons, en provoquant une différence de pression entre l'intérieur du réservoir et l'extérieur du réservoir, l'ensemble des moyens constitués par le système de mesure d'ultrasons et le dispositif pour provoquer la différence de pression étant introduits dans le réservoir lui-même à travers une ouverture de celui-ci en obturant ensuite cette ouverture.

Ce dispositif convient notamment pour la détection de fuites dans des fûts destinés à des hydrocarbures.

Le document US-5,319,956-A décrit un dispositif destiné à détecter des fuites dans des réservoirs de stockage enterrés partiellement remplis, consistant à soumettre le réservoir à une mise sous vide partielle en mesurant directement à la surface du liquide, c'est-à-dire dans le réservoir, le son produit par l'entrée d'un "fluide" dans le réservoir sous l'effet du vide.

Le document GB-2,250,820 décrit un dispositif similaire comportant également une mesure directe et interne, la détection étant cependant effectuée par une sonde qui comporte un ou deux capteurs d'un détecteur d'ultrasons.

Dans une forme d'exécution représentée dans le dessin, l'un de ces capteurs plonge dans le liquide et l'autre se trouve au-dessus du niveau du liquide.

Dans le document US-5,052,215-1, on décrit également un dispositif et un procédé pour détecter une fuite dans un réservoir de stockage de liquide en utilisant des senseurs acoustiques disposés dans le réservoir. La technique consiste à injecter un gaz ou un fluide dans la base du réservoir pour accroître la vitesse d'écoulement par la fuite.

La demande de brevet suisse CH-524818 décrit un dispositif constitué par une conduite reliée par une de ses extrémités à un réservoir et dont l'autre extrémité plonge dans la phase liquide d'un réservoir fermé, dont la phase gazeuse est raccordée à un système de dépression à vide.

Un système similaire est décrit dans le brevet américain US-3,581,101, dans lequel la détection des bulles de gaz dans le milieu liquide est effectuée au moyen d'un système de détection photoélectrique.

Le brevet américain US-3,224,252 décrit également un dispositif de détection directe de fuites dans un réservoir par des moyens de mesure d'ultrasons.

Ces procédés et dispositifs, de par leur nature, présentent l'inconvénient d'être peu sensibles, dans certains cas de nécessiter des équipements difficiles à installer et en particulier devant être introduits dans l'enceinte, et de ne pouvoir quantifier facilement une fuite de liquides et/ou de gaz.

En outre, ces procédés et dispositifs présentent également l'inconvénient d'être facilement sensibles à une perturbation du milieu affectant la précision de la détection.

### Buts de l'invention

La présente invention vise à améliorer et à étendre les domaines d'application des dispositifs et procédures de détection de fuites, en particulier des fuites mêmes très réduites, existant dans une enceinte quelconque, c'est-à-dire tout type de conduite et/ou de réservoir utilisé aussi bien pour des liquides que pour des gaz, en offrant une plus grande sensibilité que les dispositifs et procédés de l'état de la technique, et permettant ainsi une standardisation de ces enceintes.

Un but supplémentaire de la présente invention est de fournir un procédé et un dispositif qui soient peu sensibles aux perturbations provenant de l'environnement extérieur (bruit de fond, bruits extérieurs perturbants tels que passage de véhicules à proximité, etc.), et qui permettent ainsi une standardisation et un contrôle de qualité de tout type d'enceinte quel que soit l'environnement extérieur.

Sous un aspect complémentaire, un autre but de la présente invention est de fournir un procédé et un dispositif de détection de fuites dans tout type d'enceinte, quelle que soit sa taille ou sa matière, sans devoir nécessiter la présence ou la création d'une ouverture éventuelle dans ladite enceinte (identification de fuites sur des matelas médicaux en position gonflée, par exemple).

L'invention vise également à fournir un équipement qui fonctionne de manière non invasive, c'est-à-dire qui constitue un dispositif autonome externe qu'il suffit de raccorder à l'enceinte de manière permanente ou momentanée et qui n'est pas soumis à l'influence du contenu de ladite enceinte.

### Eléments caractéristiques de l'invention

Le procédé de contrôle selon l'invention de l'étanchéité d'une enceinte telle qu'une conduite ou un réservoir, dans lequel on relie de manière étanche une extrémité d'une tuyauterie à ladite enceinte, l'autre extrémité de ladite tuyauterie pénétrant de manière étanche dans un dispositif de contrôle rempli partiellement de liquide et plongeant dans ledit liquide, et dans lequel on détecte et/ou mesure par au moins un capteur d'un détecteur d'ultrasons (capteur incorporé dans ledit dispositif de contrôle et placé dans la partie liquide du réservoir) les perturbations occasionnées par des bulles émises dans ce liquide sous l'effet de l'absence d'étanchéité éventuelle dans ladite enceinte, en mettant en dépression la partie supérieure (libre) du dispositif de contrôle au-dessus dudit liquide.

Selon l'invention, la détection et/ou la mesure sont réalisées à l'aide d'un capteur d'un détecteur d'ultrasons connu en soi.

De préférence, l'extrémité de la tuyauterie plongeant dans le liquide de dispositif de contrôle, est recourbé à son extrémité (c'est-à-dire qu'elle présente un coude) de manière à faciliter la percussion et l'éclatement des bulles de gaz directement sur le capteur du détecteur d'ultrasons.

Le dispositif de contrôle est donc un dispositif de contrôle indirect de l'enceinte à tester, relié simplement par une tuyauterie à celle-ci.

Il n'est donc nullement nécessaire, comme dans les documents de l'état de la technique, d'introduire un capteur de détection dans l'enceinte dont on veut contrôler l'étanchéité.

De manière avantageuse, on isole phoniquement, le réservoir de dispositif de contrôle dans lequel est placé le capteur du détecteur d'ultrasons et éventuellement le détecteur d'ultrasons afin que celui-ci ne soit pas soumis à des perturbations extérieures.

De plus, il est indifférent que l'enceinte à contrôler soit remplie, partiellement ou pratiquement complètement d'un liquide, ou qu'elle soit exempte d'un quelconque liquide.

Comparée aux solutions de l'état de la technique impliquant une mesure directe dans l'enceinte, on n'est pas soumis à des effets d'environnement de cette enceinte, par exemple le fait qu'une cuve soit plus ou moins pleine, des effets d'échos différents suivant qu'une cuve est enterrée ou non, etc., qui pourraient donner des valeurs de mesure différentes pour un même débit de fuite dans des enceintes par ailleurs identiques.

Lorsque l'on provoque initialement une dépression dans le dispositif de contrôle, par un dispositif de mise en dépression tel qu'une pompe à vide, cette dépression se transmet également dans l'enceinte via la partie "tube plongeur" de la tuyauterie.

Ce phénomène provoque des bulles d'air dans le liquide contenu dans le dispositif de contrôle provenant de l'extrémité inférieure de la partie "plongeur", et ceci jusqu'à ce que la pression (dépression) régnant dans l'extrémité inférieure de la partie "plongeur" soit identique à la pression régnant dans l'enceinte à tester.

En effet, la hauteur de liquide entre la partie inférieure de la partie "plongeur" et la surface du liquide dans lequel elle est immergée donne une pression hydrostatique qui s'ajoute à la pression régnant dans l'atmosphère au-dessus du liquide contenu dans le dispositif de contrôle.

Lorsque l'on arrête, après établissement de l'équilibre, la mise en dépression dans le dispositif de contrôle, ce phénomène d'apparition de bulles disparaît aussitôt s'il n'y a pas de fuite, car l'équilibre des pressions dans le dispositif de contrôle et dans l'enceinte testée est maintenu.

Le capteur placé dans ce liquide permet de détecter très facilement la formation de ces bulles par suite de l'éclatement de celles-ci en surface ou directement sur le capteur. L'utilisation d'un capteur d'ultrasons placé dans la partie liquide du dispositif de contrôle permet de détecter ("par écoute" d'ultrasons), de manière beaucoup plus précise les fuites que par les dispositifs visuels ou photoélectriques de l'état de la technique, qui sont peu adaptés à la détection de la formation de micro bulles.

En outre, le procédé et le dispositif de l'invention peut être avantageusement utilisé pour une quantification et un contrôle de qualité selon des normes précises, qui permettent de quantifier et qualifier le type de fuite survenant dans différents types d'enceintes.

Parmi les domaines d'application, on peut citer le contrôle et la mesure de l'étanchéité des citernes et conduites d'alimentation de gaz et de liquides volatils ou non, d'enceintes à simple ou double paroi, des tuyauteries, des clapets anti-retour, des enceintes où les procédés et dispositifs de détection classiques ne peuvent s'appliquer par défaut de raccordement, des citernes avec plongeur, des radiateurs, des phares de véhicules, des matelas médicaux, etc. nécessitant éventuellement une standardisation et des contrôles de qualité élevés.

La mise en dépression s'effectue par tout dispositif tel qu'une pompe à vide et/ou un venturi, avec interposition éventuelle d'un ou plusieurs réservoirs tampons de manière à éviter tout phénomène de turbulence occasionné au niveau du dispositif de mise en dépression et de façon à garantir un grand débit pour provoquer le vide dans l'enceinte à tester et de préférence dans la partie libre du réservoir (cuve) du dispositif de contrôle de l'invention.

Avantageusement, le liquide dans le dispositif de contrôle est constitué d'eau ou d'un autre liquide, de préférence non volatil, tel que du glycol.

De préférence, le dispositif de contrôle des fuites, plus précisément le détecteur d'ultrasons, est connecté à un système de reconnaissance, d'enregistrement électronique et éventuellement de traitement informatique.

Avantageusement, ce système de reconnaissance et d'enregistrement électronique est incorporé au dispositif de contrôle en pouvant éventuellement former corps avec celui-ci en prenant cependant toutes les précautions d'isolation nécessaires pour éviter toute perturbation extérieure du capteur du détecteur d'ultrasons.

Selon une variante d'exécution, le dispositif selon l'invention comprend un réservoir intermédiaire de sécurité disposé le long de la tuyauterie reliant le liquide contenu du réservoir (cuve) du dispositif de l'invention et l'enceinte à tester. Ce réservoir intermédiaire comprend un capteur de sécurité permettant la détection de liquide et qui est relié à un dispositif de fermeture de la tuyauterie et disposé entre le réservoir intermédiaire et le dispositif de contrôle.

L'invention porte également sur un dispositif de contrôle de l'étanchéité d'une enceinte, comprenant une cuve remplie partiellement d'un liquide, un moyen de raccordement de la partie supérieure libre du réservoir (cuve) à un dispositif de mise en dépression de cette partie libre, une tuyauterie pénétrant partiellement dans ledit réservoir (cuve) dont une extrémité plonge dans la partie liquide du réservoir (cuve) et dont l'autre comporte des moyens de raccordement à l'enceinte à tester et un capteur d'un détecteur d'ultrasons détectant l'éclatement des bulles susceptibles d'être émises dans la partie liquide du réservoir (cuve) lors de la mise en dépression.

L'invention sera décrite plus en détail en référence à des exemples d'exécution préférés de l'invention illustrés par les dessins annexés.

### Brève description des figures

- La figure 1: représente de manière schématique le dispositif de l'invention relié à une enceinte à tester.
- Les figures 2 à 6: représentent des variantes d'exécution schématiques du dispositif de l'invention.

### Description d'une forme d'exécution préférée de l'invention

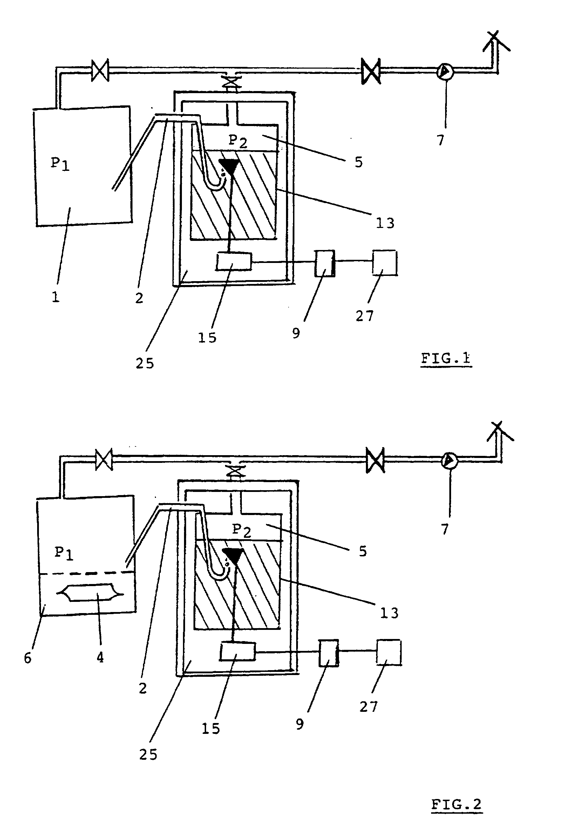

Le dispositif de l'invention représenté à la figure 1 comprend un réservoir (dénommé également cuve 13) comprenant une partie liquide 3.

Dans la partie supérieure libre 5 de cette cuve 13, les moyens de raccordement à un dispositif de mise en dépression adapté, tel qu'une pompe à vide 7, permettent de réaliser une dépression au-dessus du liquide 3. Ce même dispositif peut également être utilisé pour créer le vide dans l'enceinte 1, évitant ainsi de devoir attendre l'équilibre de la pression dans l'enceinte 1 (P1) et la cuve 13 (P2).

Dans le liquide 3 de la cuve 13 est plongée une tuyauterie 2 qui est reliée à l'enceinte 1 à tester. Ladite tuyauterie 2 qui assure la liaison entre l'enceinte 1 à tester et la cuve 13 est parfaitement étanche. Si l'équilibre entre les pressions P1 et P2 (pression régnant à l'extrémité inférieure de la partie "plongeur" immergée dans le liquide du dispositif de contrôle) est rompu par l'absence d'étanchéité de l'enceinte 1, ceci provoquera l'émission de bulles dans la partie liquide 3 de la cuve 13. Les bulles ou micro bulles de gaz émises dans la partie liquide 3 de la cuve 13 éclatent à la surface et sont ensuite détectées par un capteur d'un détecteur d'ultrasons 15 (tel que décrit dans les documents précités de l'état de la technique).

De manière avantageuse, la tuyauterie 2 présente un coude à son extrémité de manière à permettre l'éclatement des bulles de gaz directement sur le capteur du détecteur d'ultrasons 15.

Le capteur du détecteur d'ultrasons 15 est de préférence connecté à un système 9 de reconnaissance et d'enregistrement électronique de manière à pouvoir détecter, quantifier et/ou éventuellement qualifier les fuites. Ces dispositifs de reconnaissance électronique, ainsi que la cuve 13 sont isolés phoniquement de manière à ce que le capteur évite de détecter d'autres bruits issus d'une perturbation extérieure quelconque.

L'information enregistrée peut être gérée par un ordinateur 27 de manière à assurer le contrôle de qualité de tout type d'enceinte à tester.

Le procédé et le dispositif de détection selon l'invention sont donc basés sur la création de vide dans une enceinte 1 (c'est-à-dire une conduite obstruée volontairement ou un réservoir fermé et connecté au dispositif selon l'invention), qui provoque l'aspiration au travers des fuites des gaz du milieu extérieur. Les temps d'inertie observés avant la détection varient en fonction du débit du dispositif de mise en dépression 7 et en fonction de la section et de la longueur de la tuyauterie étanche 2 assurant la liaison entre l'enceinte 1 à tester et la cuve 13.

Une adaptation avantageuse du dispositif de mise sous dépression 7 et de la section de la tuyauterie 2 utilisée permet d'améliorer les caractéristiques du dispositif de l'invention.

En fonction du type d'enceinte ou du type de conduite à tester, il est possible d'adapter la section de l'extrémité "plongeur" de la tuyauterie 2 de manière à améliorer le niveau de détection de micro bulles formées ou de manière à mieux détecter, le débit de perte des gaz occasionné par les fuites. Il est bien entendu qu'en adaptant également section de la totalité de la tuyauterie, il est possible d'améliorer également la rapidité d'une détection de fuite.

En outre, l'adaptation de la cuve 13 dépend également du liquide utilisé et des domaines d'application ou du type de sensibilité recherchée.

La capacité totale de la cuve 13 est indifférente et le liquide est choisi, de préférence non volatil, de manière à assurer une bonne détection de l'émission des gaz dans le liquide 3 contenu dans la cuve 13.

Comme représenté à la figure 2, le dispositif de l'invention est particulièrement adapté pour tester également de manière indirecte tout type d'enceinte dans laquelle aucune ouverture n'a été conservée et/ou ne peut être créée, comme par exemple certains matelas médicaux. Pour tester de tels produits, on dispose le matelas médical 4 à tester dans un réservoir 6 plus grand, présentant une ouverture, et comprenant de préférence une grille de manière à séparer le matelas médical 4 à tester de ladite ouverture par laquelle le réservoir 6 est mis en connexion avec le dispositif de l'invention. En créant le vide dans le réservoir 6, qui est dans ce cas-ci parfaitement étanche, il est possible de détecter l'émission des parties gazeuses s'échappant des fuites du matelas 4 à tester par l'émission de ces gaz dans le liquide 3 de la cuve 13 du dispositif de l'invention. Dans le présent cas, on peut estimer que l'enceinte testée est le réservoir 6 parfaitement étanche incorporant le matelas médical 4 en position gonflée.

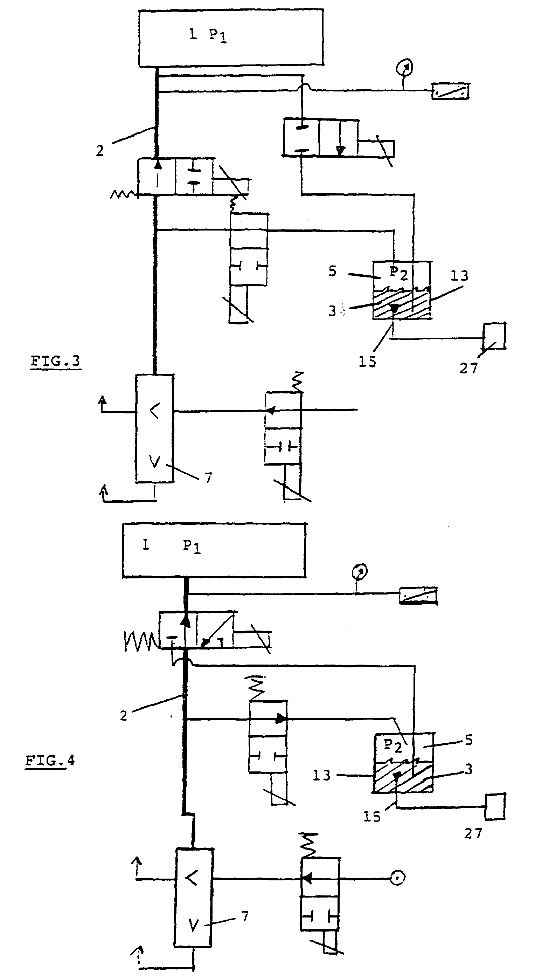

Le dispositif selon l'invention tel que représenté à la figure 3 comporte également des distributeurs 11, 17 et 19 en position "normalement ouvert au repos". Dans cet exemple, un dispositif de mise en dépression (venturi) 7 crée un vide simultanément dans l'enceinte 1 à tester par l'intermédiaire du distributeur 10 et dans la cuve 13 par l'intermédiaire du distributeur 12. Lorsque la dépression atteint le niveau désiré, le pressostat 14 sonne le signal électrique pour le basculement des distributeurs 11, 17 et 19, ce qui provoque respectivement une coupure de l'alimentation pneumatique et le maintien de la dépression dans la cuve 13, ainsi que le raccordement de l'enceinte à tester sur la partie plongeur de la tuyauterie 2 dans la cuve 13.

Selon une variante d'exécution représentée à la figure 4, les distributeurs 11, 17 et 19 sont en position "normalement ouvert au repos" et le distributeur 16 est fermé au repos. Le venturi 7 crée ensuite un vide simultanément dans l'enceinte 1 à tester par l'intermédiaire du distributeur 17 et dans la cuve 13 par l'intermédiaire du distributeur 19. Lorsque la dépression atteint le niveau désiré, le pressostat 14 donne le signal électrique pour le basculement des distributeurs 11, 16, 17, et 19, ce qui provoque respectivement la coupure de l'alimentation pneumatique, le maintien de la dépression dans la cuve 13 et le raccordement de l'enceinte 1 à tester sur la "partie plongeur" de la tuyauterie 2 dans la cuve 13. Dans ce cas de figure, la "partie plongeur" peut être raccordée en petite section directement tandis que dans le cas précédent, tel que décrit dans la figure 3, la "partie plongeur" est raccordée sur une section intermédiaire plus grosse entre le distributeur 17 et le volume 1.

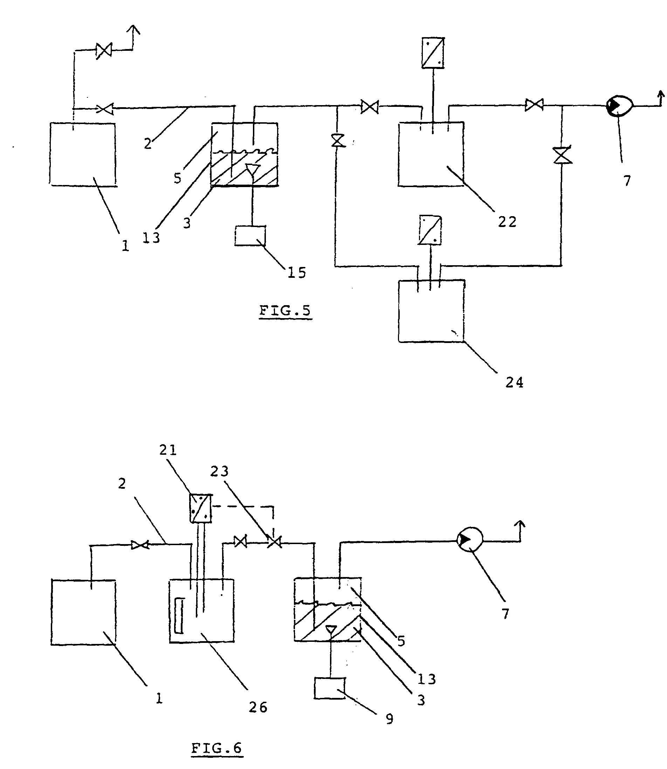

Dans la forme d'exécution préférée représentée à la figure 5, on a représenté une variante d'exécution où le dispositif de mise en dépression 7 comprend des réservoirs 22 et 24 qui font office "d'accumulateurs de vide" travaillant alternativement de manière à garantir un grand débit pour provoquer le vide dans la partie libre 5 de la cuve 13.

Dans une autre forme d'exécution représentée à la figure 6, on utilise l'hypothèse de travail selon laquelle l'enceinte 1 à tester contient une partie certaine de quantité de liquide, celui-ci pouvant alors être piégé dans un réservoir intermédiaire 26 lorsque l'on crée le vide. En cas de surremplissage, un capteur de niveau 21 bloque automatiquement le dispositif de l'invention en pilotant une vanne 23.

Dans les tests d'évaluation, des fuites sont provoquées dans une enceinte à l'aide d'une micro-vanne (de précision). Il est ainsi possible d'effectuer différents réglages afin de tester les performances de différents dispositifs dans différents cas de figure. Le déroulement de ces tests s'effectue en deux étapes :
- on règle la micro-vanne de façon à obtenir une détection ultrasonore très claire, une bulle par seconde par exemple, jusqu'à la plus petite fuite détectable par le dispositif utilisé;
- pour chaque réglage distinct de la micro-vanne, on effectue une comparaison en plaçant la micro-vanne sur un réservoir avec de l'eau qui est mis sous pression hydrauliquement à différentes pressions. Il est ainsi plus aisé de calculer un débit de fuite sous pression hydraulique.

Par le dispositif de l'invention, il est possible de qualifier le réglage d'une fuite à l'aide de la micro-vanne de précision sur le volume d'une enceinte à tester pour obtenir périodiquement un écho par le détecteur d'ultrasons correspondant à l'éclatement d'une bulle par seconde. En outre, le degré de précision est tel que dans certains cas, en plaçant de l'eau dans l'enceinte, on ne constate aucune perte de liquide (eau) lorsque ladite enceinte est testée à pression atmosphérique. Par contre, lorsque celle-ci est soumise à une pression hydraulique de 1 bar, il est possible de constater une perte d'environ 50 ml par semaine.

Le dispositif et le procédé de l'invention sont particulièrement adaptés pour détecter des fuites dans des enceintes comportant des milieux gazeux. En effet, lorsque l'on utilise le dispositif et le procédé de l'invention, s'il existe une fuite dans l'enceinte à tester, il y a rapidement une rupture de l'équilibre de dépression entre l'enceinte à tester et le dispositif de contrôle de l'invention, ce qui provoquera l'émission de bulles. Plus le volume de l'enceinte à tester est grand, plus le débit de fuite devra être grand pour provoquer l'émission de bulles dans un milieu gazeux qui est d'un milieu compressible et donc un milieu élastique. En adaptant la section de la tuyauterie pénétrant de façon étanche dans le dispositif de contrôle et plongeant dans la partie liquide de ce dispositif de contrôle, on diminue la taille des bulles émises et on augmente le nombre de bulles émises par unité de temps, ce qui facilite la détection par le détecteur d'ultrasons qui est en mesure de détecter même des microbulles qui ne sont pas détectables par des procédés et dispositifs classiques basés sur des mesures visuelles ou photoélectriques.

Il est important de noter que dans un appareil classique de détection ultrasonore, le capteur détecte les turbulences générées par la fuite. Par conséquent, il peut également détecter les perturbations provenant de l'environnement extérieur tandis que le procédé d'une invention, détecte l'effet d'une bulle lors de son éclatement soit sur le capteur, soit à la surface de la partie liquide. Le dispositif de l'invention, est basé sur une détection d'un petit volume (bulle ou micro bulle) tandis que les dispositifs de l'état de la technique sont basés sur la détection d'une turbulence c'est-à-dire un certain débit gazeux dans un "grand" volume susceptible d'être perturbé par des turbulences extérieures.

Par conséquent, un dernier avantage du procédé et dispositif de l'invention est son application à la détection de fuites sur des enceintes maintenues en pression ou en dépression. Dans ce cas il est possible de détecter les turbulences occasionnées par une fuite dans cette enceinte, sans que la précision de la détection ne soit affectée par des perturbations provenant de l'environnement extérieur. Dans ces applications, le dispositif et le procédé de l'invention permettent une détection mille fois plus précise qu'un appareil classique de détection ultrasonore de fuites en mesure directe.

## Revendications

1. Procédé de contrôle de l'étanchéité d'une enceinte (1) telle qu'une conduite ou un réservoir dans lequel on relie de manière étanche une extrémité d'une tuyauterie (2) à ladite enceinte (1), l'autre extrémité de ladite tuyauterie pénétrant de manière étanche dans un réservoir (13) d'un dispositif de contrôle rempli partiellement de liquide (3), et plongeant dans ledit liquide (3), **caractérisé en ce que** l'on détecte et/ou mesure via un capteur d'ultrasons (15) les perturbations occasionnées par des bulles émises dans ce liquide (3) sous l'effet de l'absence d'étanchéité éventuelle dans ladite enceinte (1), en mettant en dépression la partie libre (5) du dispositif de contrôle au-dessus dudit liquide.

2. Procédé selon la revendication 1, **caractérisé en ce que** le réservoir (13) où est disposé le capteur de détecteur d'ultrasons (15) est isolé phoniquement.

3. Procédé selon la revendication 1 ou 2, **caractérisé en ce que** le détecteur d'ultrasons (15) est connecté à un système de reconnaissance et d'enregistrement électronique (9).

4. Procédé selon l'une quelconque des revendications 1 à 3, **caractérisé en ce que** le liquide (3) dans le dispositif de contrôle est constitué d'eau ou d'un autre liquide, non volatil.

5. Dispositif de contrôle de l'étanchéité d'une enceinte (1), comprenant un réservoir (13) rempli partiellement d'un liquide (3), un moyen de raccordement de la partie supérieure libre de la cuve à un dispositif de mise en dépression (7) de la partie libre (5) d'un réservoir (13), une tuyauterie (2) pénétrant partiellement dans ledit réservoir (13), dont une extrémité plonge dans la partie liquide (3) du réservoir (13) et dont l'autre extrémité comporte des moyens de raccordement à une enceinte (1) à tester, **caractérisé en ce qu'**il comporte dans la partie liquide de réservoir (13) un capteur d'un détecteur d'ultrasons (15) des bulles susceptibles d'être émises dans la partie liquide (3) du réservoir (13) lors de sa mise en dépression.

6. Dispositif selon la revendication 5, **caractérisé en ce que** le dispositif de mise en dépression (7) est une pompe à vide ou des venturis.

7. Dispositif selon la revendication 5 ou 6, **caractérisé en ce que** le réservoir (13) dans lequel est disposé le capteur du détecteur d'ultrasons (15) comporte un moyen d'isolation phonique et **en ce que** le détecteur d'ultrasons (15) est connecté à un système (9) de reconnaissance, d'enregistrement électronique et éventuellement d'analyse informatique.

8. Dispositif selon l'une quelconque des revendications 5 à 7, **caractérisé en ce qu'**il comporte un ou plusieurs réservoir(s) tampon(s) (22, 24) disposés entre le dispositif de mise en dépression (7) et la partie libre (5) du réservoir (13) et/où l'enceinte (1).

9. Dispositif selon l'une quelconque des revendications 5 à 8, **caractérisé en ce qu'**il comporte un réservoir intermédiaire (26) disposé le long de la tuyauterie (2) reliant la partie liquide (3) du réservoir (13) et l'enceinte (1).

10. Dispositif selon la revendication 9, **caractérisé en ce qu'**il comporte un capteur de liquide (21) relié à un dispositif de fermeture étanche de la tuyauterie (2) sur le réservoir (26).

## Patentansprüche

1. Verfahren zur Dichtheitsüberprüfung eines Gehäuses (1) wie etwa einer Rohrleitung oder einem Behälter, wobei auf dichte Art und Weise ein Ende einer Leitung (2) mit dem besagten Gehäuse (1) verbunden wird, wobei das andere Ende der besagten Leitung auf dichte Art und Weise in einen Behälter (13) einer Prüfvorrichtung, der teilweise mit Flüssigkeit (3) gefüllt ist, eindringt und in die besagte Flüssigkeit (3) eintaucht, **dadurch gekennzeichnet, dass** mittels eines Ultraschallfühlers (15) die Störungen in dem besagten Gehäuse (1) aufgespürt und/oder gemessen werden, die durch Blasen verursacht werden, welche durch die Auswirkung einer eventuellen Undichte in der Flüssigkeit (3) freigesetzt werden, wobei im freien Teil (5) der Prüfvorrichtung oberhalb der besagten Flüssigkeit ein Unterdruck erzeugt wird.

2. Verfahren nach Anspruch 1, **dadurch gekennzeichnet, dass** der Behälter (13), wo sich der Fühler des Ultraschalldetektors (15) befindet, schallgedämpft ist.

3. Verfahren nach Anspruch 1 oder 2, **dadurch gekennzeichnet, dass** der Ultraschalldetektor (15) an ein elektronisches Erkennungs- und Aufzeichnungssystem (9) angeschlossen ist.

4. Verfahren nach irgendeinem der Ansprüche 1 bis 3, **dadurch gekennzeichnet, dass** die Flüssigkeit (3) in der Prüfvorrichtung aus Wasser oder einer anderen nicht flüchtigen Flüssigkeit besteht.

5. Vorrichtung zur Prüfung der Dichtheit eines Gehäuses (1), umfassend einen teilweise mit Flüssigkeit (3) gefüllten Behälter (13), ein Hilfsmittel zur Verbindung des freien oberen Teils des Behälters an eine Vorrichtung (7), welche im freien Teil (5) eines Behälters (13) einen Unterdruck erzeugt, eine Leitung (2), die teilweise in den besagten Behälter (13) eindringt, deren eines Ende in den flüssigen Teil (3) des Behälters (13) eintaucht und deren anderes Ende Hilfsmittel zur Verbindung an ein zu prüfendes Gehäuse (1) umfaßt, **dadurch gekennzeichnet, dass** sie im flüssigen Teil des Behälters (13) einen Fühler eines Ultraschalldetektors (15) für Blasen umfaßt, die im flüssigen Teil (3) des Behälters (13) freigesetzt werden können, wenn in diesem ein Unterdruck erzeugt wird.

6. Vorrichtung nach Anspruch 5, **dadurch gekennzeichnet, dass** die den Unterdruck erzeugende Vorrichtung (7) eine Vakuumpumpe ist oder Venturis sind.

7. Vorrichtung nach Anspruch 5 oder 6, **dadurch gekennzeichnet, dass** der Behälter (13), in dem sich der Fühler des Ultraschalldetektors (15) befindet, ein Hilfsmittel zur Schalldämpfung umfaßt, und dass der Ultraschalldetektor (15) an ein elektronisches Erkennungs-, Aufzeichnungs- und gegebenenfalls Datenanalysesystem (9) angeschlossen ist.

8. Vorrichtung nach irgendeinem der Ansprüche 5 bis 7, **dadurch gekennzeichnet, dass** sie einen oder mehrere Pufferbehälter (22, 24) umfaßt, die sich zwischen der den Unterdruck erzeugenden Vorrichtung (7) und dem freien Teil (5) des Behälters (13) und/oder dem Gehäuse (1) befinden.

9. Vorrichtung nach irgendeinem der Ansprüche 5 bis 8, **dadurch gekennzeichnet, dass** sie einen Zwischenbehälter (26) umfaßt, der sich entlang der Leitung (2) befindet, die den flüssigen Teil (3) des Behälters (13) und das Gehäuse (1) verbindet.

10. Vorrichtung nach Anspruch 9, **dadurch gekennzeichnet, dass** sie einen Flüssigkeitsfühler (21) umfaßt, der mit einer Vorrichtung zum dichten Verschluß der Leitung (2) an dem Behälter (26) verbunden ist.

## Claims

1. A method for monitoring the tightness of an enclosure (1) such as a pipe or a tank, wherein an end of a piping (2) is tightly connected to said enclosure (1) , the other end of said piping tightly penetrating into a tank (13) of a monitoring device partially filled with a liquid (3) and being immerged into said liquid (3), **characterised in that**, by means of an ultrasonic sensor (15), the perturbations due to the bubbles being emitted in said liquid (3) under the effect of any possible lack of tightness in said enclosure (1) are detected and/or measured, putting under depression the free part (5) of the monitoring device above said liquid.

2. The method according to claim 1, **characterised in that** the tank (13) where the sensor of the ultrasonic detector (15) is arranged is phonically isolated.

3. The method according to claim 1 or 2, **characterised in that** the ultrasonic detector (15) is connected to an electronic recognition and recording system.

4. The method according to any of claims 1 to 3, **characterised in that** the liquid (3) in the monitoring device consists of water or another nonvolatile liquid.

5. A device for monitoring the tightness of an enclosure (1), comprising a tank (13) partially filled with a liquid (3), a means for connecting the free upper part of the tank to a device (7) for putting under depression the free part (5) of a tank (13), a piping (2) partially penetrating into said tank (13), one end thereof being immerged in the liquid part (3) of the tank (13) and the other end thereof comprising means for connecting to an enclosure (1) to be tested, **characterised in that** it comprises in the liquid part of the tank (13) a sensor of an ultrasonic detector (15) for detecting bubbles which might be emitted in the liquid part (3) of the tank (13) upon the depression step thereof.

6. The device according to claim 5, **characterised in that** the depression device (7) is a vacuum pump or venturis.

7. The device according to claim 5 or 6, **characterised in that** the tank (13) wherein the sensor of the ultrasonic detector (15) is arranged comprises a sound insulation means and **in that** the ultrasonic detector (15) is connected to an electronic recognition, recording and optionally computer analysis system (9).

8. The device according to any of claims 5 to 7, **characterised in that** it comprises one or more buffer tanks (22, 24) arranged between the depression device (7) and the free part (5) of the tank (13) and/or the enclosure (1).

9. The device according to any of claims 5 to 8, **characterised in that** it comprises an intermediate tank (26) arranged along the piping (2) connecting the liquid part (3) of the tank (13) and the enclosure (1).

10. The device according to claim 9, **characterised in that** it comprises a liquid sensor (21) connected to a device for tightly sealing the piping (2) on the tank (26).
